# EUROPÄISCHE PATENTANMELDUNG

(11) **EP 0 737 713 A1**
(43) Veröffentlichungstag der Anmeldung: **16.10.1996**
(21) Anmeldenummer: 96105522.5
(22) Anmeldetag: 06.04.1996
(51) Int. Cl.: C08L 23/16

(54) **Kunststoffdichtungsbahn auf des Basis von single-site Katalysates-Polyolefin**

(30) Priorität: 10.04.1995 CH 1033/95
(71) Anmelder: Sika AG, vorm. Kaspar Winkler & Co., CH-8048 Zürich (CH)
(72) Erfinder: Slongo, Mario, Dr., 1712 Trafers (CH); Arber, Willy, Dr., 8174 Stadel (CH)
(74) Vertreter: Blum, Rudolf Emil Ernst

(57) **Zusammenfassung**

Die Erfindung betrifft Kunststoffdichtungsbahnen aus Polyolefin-Zusammensetzungen, die mindestens ein homogenes Polyolefin Copolymer und mindestens ein weiteres Polyolefin Polymer enthalten, wobei das zweite Polyolefin-Polymer ein heterogenes Standard Homo- oder Copolymer sein kann oder ein weiteres homogenes Copolymer, das sich vom ersten homogenen Copolymer unterscheidet.

## Beschreibung

Die vorliegende Erfindung betrifft Kunststoffdichtungsbahnen (KDB's), und deren Herstellung, sowie neue, für die Herstellung von Kunststoffdichtungsbahnen geeignete Polymer-Zusammensetzungen.

Im Bausektor, sowohl im Hochbau als auch im Tiefbau, werden u.a. Kunststoffdichtungsbahnen zur Abdichtung von Bauwerken gegenüber jeglicher Art von Feuchtigkeit eingesetzt. Ein im Bausektor essentielles Erfordernis derartiger Kunststoffdichtungsbahnen ist, dass diese eine gute Flexibilität, unter Beibehaltung, der von den Normen (z.B. DIN 16734 und DIN 16730, sowie SIA 280) verlangten Anforderungen bezüglich mechanischem und thermischem Verhalten und wenn möglich, in Kombination dazu, eine gute Heissluftschweissbarkeit besitzen sollen. Die auf dem Markt diesbezüglich angebotenen Kunststoffdichtungsbahnen sind aber, vor allem was die Flexibilität und die Heissluftschweissbarkeit betrifft, nicht restlos zufriedenstellend.

Derartige bekannte Kunststoffdichtungsbahnen werden entweder aus High Density Polyethylen (HDPE), Low Density Polyethylen (LDPE), oder Linear Low Density Polyethylen (LLDPE) hergestellt. Diese Polyethylen (PE) Typen sind im allgemeinen zu wenig flexibel für den Anwendungsbereich als Kunststoffdichtungsbahn. Trotzdem werden aufgrund ihrer guten mechanischen Festigkeit und Chemikalienbeständigkeit immer noch z.B. LLDPE eingesetzt.

Unter LLDPE versteht man im allgemeinen Copolymere aus Ethylen und einem oder mehreren α-Olefin Monomeren, die bei niedrigem Druck unter Verwendung von Ziegler-Natta-Katalysatoren hergestellt werden. Der Dichtebereich dieser LLDPE variiert je nach Comonomerengehalt zwischen 0,900 - 0,940 g/cm³.

Diese "konventionellen" Ethylen-α-Olefin Copolymer-Systeme werden in Fachkreisen als heterogene Systeme bezeichnet, da die Ziegler-Natta-Katalysatoren bekannterweise unterschiedlich aktive Zentren aufweisen, die zu einer breiten Molekulargewichtsverteilung und zu einem unregelmässigen (heterogenen) Einbau der Comonomeren in die Polymerkette führen.

Kunststoffdichtungsbahnen die aus diesen konventionellen Polyolefinen hergestellt werden, zeigen neben der ungenügenden Flexibilität auch gewisse Nachteile in der Heissluft-Verschweissbarkeit. Beispielsweise kann die Migration von niedermolekularen Anteilen mit hohem Comonomergehalt aus dem Polymeren die Nahtfestigkeit erheblich beeinträchtigen. Dieser nachteilige Prozess wird durch Wärmeeinwirkung noch erheblich beschleunigt. Zudem weist die Kunststoffdichtungsbahn nicht selten eine klebrige Oberfläche auf, die zu einer starken Verschmutzung der Oberfläche führen kann.

In jüngster Zeit ist ein neuer Typus von Ethylen-Copolymeren bekannt geworden, nämlich homogene Polyolefin-Systeme, welche das Ergebnis einer neuen Katalysatortechnik sind. Als Katalysatoren zu deren Herstellung dienen z.B. Metallocen-Verbindungen (z.B. PTC-Publikation WO 94/06857), bestehend aus einem oder mehreren substituierten oder unsubstituierten Cyclopentadienyl-Ringen, gebunden an ein Uebergangsmetallatom, wie Zirkonium, Titan, Hafnium oder Vanadium. Diese Katalysatoren besitzen eine einzige aktive Stelle, an der eine Polymerisationsreaktion stattfinden kann und werden deshalb in Fachkreisen als "single-site" oder "homogene" Katalysatoren bezeichnet.

Durch Variation der Katalysatorstruktur (z.B. US-A-5,272,236 oder US-A-5,278,272) können bestimmte Polymereigenschaften, wie z.B. Molekulargewicht, Molekulargewichtsverteilung, Art und Menge des Comonomer und dessen Verteilung in der Polymerkette wunschgemäss eingestellt werden.

Als Ergebnis werden Copolymer-Systeme erhalten, die aus einheitlichen, d.h. homogenen Copoly-merketten, nicht nur in der Kettenlänge, sondern auch im durchschnittlichen Comonomerengehalt bestehen. Sie weisen zudem eine enge Molekulargewichtsverteilung auf. Das Verhältnis Mw/Mn liegt allgemein im Bereich von 1,5 - 2,5 , im Gegensatz zu den konventionellen Olefin-Copolymeren, die mit herkömmlichen Ziegler-Natta-Katalysatoren hergestellt sind und die ein Mw/Mn Verhältnis von ca. 3,5 - 8,0 aufweisen.

Solche homogenen Copolymere haben vor allem für Verpackungsfolien Verwendung gefunden. Die US-A-5,272,236 (Kol. 14) beschreibt lineare Olefin-Polymere, welche mit einem anderen natürlichen oder synthetischen Polymer gemischt sein können, sie gibt aber keinerlei Hinweis auf Mischungen, die den hohen Anforderungen an Kunststoffdichtungsbahnen genügen; analoges trifft auch für die US-A-5,278,272 zu. Die PCT-Anmeldung,WO 94/06857, betrifft ebenfalls Polyethylen-Zusammensetzungen für Filme aus einem VLD-Ethylen-Polymer (VLD = very low density) und einem Ethylen-Polymer niederer bis mittlerer Dichte, die insbesonders für die Verwendung in Windeln geeignet sind. Schliesslich beschreibt die US-A-5,229,197 noch eine Mischung aus einem chlorierten Polyethylen und einem kristallinen Polyolefin zur Verwendung als Membranfolie.

Gemenge aus homogenen und heterogenen Copolymeren und/oder Gemenge aus zwei homogenen Copolymeren sind aus WO 94/25523, WO 93/03093, EP 0 587 365, WO 95/09199, EP 0 244 982 sowie der gegenüber dem Prioritätsdokument nachveröffentlichten WO 95/10566 bekannt. Solche Kunststoffe werden insbesonders für Verpackungsfolien und gegebenenfalls Formkörper beschrieben. Diese Zusammensetzungen des Standes der Technik eignen sich nicht für Kunststoffdichtungsbahnen, da sie zu geringe Flexibilität aufweisen. EP 0 634 443 beschreibt Folien, die sich unter Wärmeeinfluss zusammenziehen. Auch solche Produkte sind als Kunststoffdichtungsbahnen denkbar ungeeignet.

An Kunststoffdichtungsbahnen werden nämlich sehr hohe Anforderungen gestellt. Diese sind beispielsweise in der SIA-Norm 280, Ausgabe 1983 (Herausgeber: Schweizerischer Ingenieur- und Architekten-Verband, Zürich) oder in den deutschen DIN-Normen (16730 und 16734) festgelegt. Wesentliche in dieser Norm festgelegte Kriterien sind die Reissdehnung von min. 200% für nicht gewebearmierte Bahnen, bei Faltbiegung in der Kälte keine Risse bei -20°C, eine solche mechanische Durchschlagsfestigkeit, dass die Bahn z.B. bei 300 resp. 750 mm Fallhöhe und mit einem Fallkörper von 500 g dicht ist, sowie eine solche Nahtfestigkeit, dass der Bruch neben der Naht eintritt. Die Reissfestigkeit, obschon nur in der DIN-Norm (16730) festgelegt, sollte mehr als 15 N/mm² betragen. Die Formänderung in der Wärme (6 Stunden bei 80°C) muss bei unarmierten KDB's weniger als 2% und bei armierten KDB's weniger als 0,5% betragen.

Aus Erfahrungen mit Kunststoffdichtungsbahnen ist ferner bekannt, dass eine hohe Flexibilität anzustreben ist. Ein weiteres für solche Bahnen wesentliches Merkmal ist die Schweissbarkeit, insbesondere die Heissluftschweissbarkeit. Für diese gibt es keine Normvorschriften, aber die Voraussetzung für KDB's ist die, dass sie nach Lagerung während 7 Tagen bei 70°C noch schweissbar sind, d.h. also eine Nahtfestigkeit nach Wärmelagerung vorhanden ist. Dies ist gerade bei KDB's auf Polyethylenbasis nicht unbedingt erfüllt. Speziell bei einer breiten Molekulargewichtsverteilung (nach Ziegler-Natta-Katalyse) können niedermolekulare Anteile an die Oberfläche migrieren und so die Festigkeit der Schweissnaht beeinträchtigen. Dieser Sachverhalt wird in diesen Unterlagen vorstehend beschrieben.

Aufgabe der Erfindung war es daher, Kunststoffdichtungsbahnen aus Polyolefinen bereitzustellen, welche gegenüber den bekannten Kunststoffdichtungsbahnen keine nachteiligen Effekte aufweisen, und zudem eine sehr gute Flexibilität in Kombination mit einer sehr guten Heissluftschweissbarkeit besitzen, sowie die Bereitstellung solcher Produkte, die hinsichtlich Feuchtigkeitsdurchlässigkeit und/oder Feuerbeständigkeit etc. optimiert sind.

Diese Aufgabe wird gelöst durch die Bereitstellung von Kunststoffdichtungsbahnen aus speziellen Polyolefin-Zusammensetzungen, die mindestens ein homogenes Polyolefin-Copolymer, abgemischt mit mindestens einem weiteren Polyolefin, enthalten oder daraus bestehen, wobei die homogenen Polyolefin-Copolymeren mittels "singlesite" Katalysatortechnik herstellbar sind und eine Molekulargewichtsverteilung von 1,5 bis 2,5 aufweisen. Dieses mindestens eine weitere Polyolefin kann entweder ein konventionelles heterogenes Standard-Polyolefin oder ein anderes homogenes Polyolefin-Copolymer sein.

In bevorzugten erfindungsgemässen Polyolefin-Zusammensetzungen enthält die Zusammensetzung
a) das heterogene Homo- oder Copolymer in Mengen von etwa 10 bis 60 Gew.-% und das homogene Copolymer in Mengen von etwa 90 bis 40 Gew.-%, oder
b) jede der Komponenten der mindestens zwei unterschiedlichen homogenen Copolymere in Mengen von etwa 20 bis 80 Gew.-%, insbesonders 30-80 Gew.-%, wobei beide Komponenten zusammen max. 100% ergeben.

Weitere Gegenstände der Erfindung sind in den unabhängigen Ansprüchen und besondere Ausführungsformen in den abhängigen Ansprüchen offenbart.

Bei den homogenen Copolymeren handelt es sich vorzugsweise um homogene Polyethylen-Copolymere. Bei den Comonomeren handelt es sich vor allem um Olefine und insbesondere um α-Olefine mit vorzugsweise 3 - 20 Kohlenstoffatomen, besonders bevorzugt 4 - 12 Kohlenstoffatomen und ganz besonders bevorzugt 4 - 8 Kohlenstoffatomen.

Die Polyethylen Copolymeren mit C₃ - C₂₀ α-Olefinen, welche nach der single-site Katalysatortechnik hergestellt werden, sind z.B. aus der US-A-5,272,236, US-A-5,278,272 und PCT Publikation WO 94/06857 bekannt und können nach den dort genannten Verfahren hergestellt werden, wobei die nach diesen Verfahren erhaltenen Copolymeren durch eine definierte, enge Molekulargewichtsverteilung mit einer sehr guten Einheitlichkeit der Verteilung der Comonomeren über alle Polymerketten gekennzeichnet sind.

Als C₃ - C₂₀ α-Olefine, welche zur Copolymerisation in Frage kommen, sind vor allem genannt: 1-Propen, 1-Buten, 1-Penten, 1-Hexen, 4-Methyl-1-penten, 1-Octen, 1-Decen und 1-Dodecen. Bevorzugt handelt es sich um 1-Buten, 1-Hexen und um 1-Octen.

Der Anteil des Olefins, vor allem des C₃ -C₂₀ α-Olefins im homogenen Polyethylen-Copolymer kann dabei von etwa 10 Gew.-% bis etwa 40 Gew.-% variieren. Es handelt sich bei den Mischungen a) beim homogenen Copolymer also z.B. um ein homogenes Polyethylen-Copolymer, welches etwa 10 - 20 Gew.-% 1-Octengehalt aufweist, oder um ein homogenes Polyethylen-Copolymer, welches etwa 21 - 40 Gew.-% 1-Octengehalt besitzt.

Bei den Mischungen b) handelt es sich z.B. um ein homogenes Polyethylen-Copolymer, welches etwa 10 - 20 Gew.-% 1-Octengehalt aufweist zusammen mit einem Polyethylen-Copolymer, welches etwa 21 - 40 Gew.-% 1-Octengehalt aufweist.

Es ist bekannt, dass Verpackungsfolien bei zu geringer Dichte an Festigkeit einbüssen. Ueberraschenderweise wurde nun gefunden, dass Kunststoffdichtungsbahnen bei einer Dichte der homogenen Copolymeren im Bereich von 0,860 bis 0,910 g/cm³, insbesonders kleiner als 0,9 g/cm³, gute Flexibilität bei gleichzeitig hoher Festigkeit aufweisen, sowie ausgezeichnete Schweissbarkeit, da einerseits die Migration an niedermolekularen Anteilen in erfindungsgemässen Dichtungsbahnen reduziert und andererseits infolge der hohen Flexibilität guter Kontakt der zu schweissenden Flächen gegeben ist.

Beim heterogenen Standard Polyolefin Homo- oder Copolymer handelt es sich z.B. um die bekannten Polymeren, vor allem um HDPE, MDPE, LDPE, LLDPE, VLDPE und ULDPE Polymere insbesondere mit 1-Buten, 1-Hexen, 1-Octen oder 4-Methyl-1-penten als Comonomer. Des weiteren werden unter heterogenen Polyolefin Polymeren hier auch noch Elastomere verstanden, wie Styrol-Ethylen-Buten-Styrol-Blockcopolymere, ein Ethylen-Propylen-Dien-Elastomer, ein Ethylen-1-Buten Elastomer und chlorierte Polyethylene ferner Ethylen-Copolymere, wie ein Ethylen-Vinylacetat-Copolymer, ein Ethylen-Acrylat-Copolymer oder ein Ethylen-Methacrylat-Copolymer, oder ein Terpolymer auf Ethylen-Vinylacetat-Kohlenmonoxid Basis oder Ethylen-Butylacrylat-Kohlenmonoxid Basis.

All diese heterogenen Polymere können einzeln oder in Mischung untereinander eingesetzt werden.

Wesentlich ist, dass die Polyolefin-Zusammensetzungen das homogene Polyolefin-Copolymer enthalten. In geeigneten Polyolefin-Zusammensetzungen enthält die Zusammensetzung als heterogenes Homo- oder Copolymer, mindestens eines von HDPE, MDPE, LDPE, LLDPE, VLDPE oder ULDPE oder mindestens ein Elastomer oder mindestens ein Ethylen-Copolymer und als homogenes Copolymer mindestens ein Polyethylen/Olefin Copolymer.

Besonders geeignet sind Polyolefin-Zusammensetzungen welche als homogenes Copolymer ein Polyethylen/α-Olefin Copolymer, vor allem ein C₃ - C₂₀ α-Olefin, insbesondere ein C₄ - C₁₂ α-Olefin und besonders bevorzugt ein C₄- C₈ α-Olefin enthalten.

Weiter bevorzugt sind Polyolefin-Zusammensetzungen, worin der Olefin- bzw. α-Olefin Comonomer-Anteil im homogenen Copolymer etwa 10 bis 20 Gew.-% oder etwa 21 bis 40 Gew.-% beträgt, je nach Mischungspartner.

Von besonderem Interesse sind schliesslich Polyolefin-Zusammensetzungen, welche eine Mischung enthalten aus einem heterogenen Polyolefin Homo- oder Copolymer und mindestens einem homogenen Polyolefin Copolymer, vor allem einem heterogenen Standard Polyethylen Polymer, HDPE, MDPE (Medium Density Polyethylene), LDPE, LLDPE, VLDPE (Very Low Density Polyethylene) oder ULDPE (Ultra Low Density-PE) mit einem homogenen Polyethylen/C₃-C₂₀ α-Olefin Copolymer dessen α-Olefin Comonomer-Anteil 21 bis 40 Gew.-% beträgt oder eine Mischung aus einem heterogenen Polyolefin-Copolymer oder einem heterogenen Polyolefin-Elastomer Polymer mit einem homogenen Polyethylen/C₃-C₂₀ α-Olefin Copolymer dessen α-Olefin Comonomer-Anteil 10 bis 20 Gew.-% beträgt oder eine Mischung aus einem heterogenen Polyolefin-Copolymer mit einem homogenen Polyethylen/C₃-C₂₀ α-Olefin Copolymer dessen α-Olefin Comonomer-Anteil 10 bis 20 Gew.-% beträgt sowie Polyolefin-Zusammensetzungen, welche eine Mischung enthalten aus mindestens einem homogenen Polyolefin Copolymer und mindestens einem weiteren von diesem verschiedenen homogenen Polyolefin Copolymer, wie vor allem eine Mischung aus 30 - 80 Gew.-% eines homogenen Polyethylen/C₃-C₂₀ α-Olefin Copolymers dessen α-Olefin Comonomer-Anteil 10 bis 20 Gew.-% beträgt, und 20 - 70 Gew.-% eines homogenen Polyethylen/C₃-C₂₀ α-Olefin Copolymer dessen α-Olefin Comonomer-Anteil 21 bis 40 Gew.-% beträgt.

Als heterogene Polyolefin-Copolymere seien beispielsweise Ethylen-Vinylacetat- und Ethylen-Acrylat-Copolymere genannt. Als Polyolefin-Elastomere eignen sich beispielsweise Styrol-Ethylen-Buten-Styrol-Blockcopolymere, Ethylen-Propylen-Dien-Elastomere, Ethylen-1-Buten-Elastomere etc.

Schubmodule (+20°C) bevorzugter homogener Copolymeren liegen unter 100 N/mm², insbesonders ≦ ca. 75 N/mm², beispielsweise ≦ ca. 71 N/mn².

Die Polyolefin-Zusammensetzungen können noch weitere Zusätze enthalten; erwähnt sind z.B.: farbgebende Zusätze, Weichmacher (nur falls gewünscht, wobei im Normalfall keine zugesetzt werden), Fungizide, Füllstoffe, Antioxidantien, Lichtschutzmittel, Flammschutzmittel, Gleitmittel und Antistatika.

All diese Zusätze können einzeln oder in Mischung untereinander, also z.B. zwei oder mehrere voneinander unterschiedliche Zusätze, vorhanden sein.

Kunststoffdichtungsbahnen sind sowohl im Hoch- als auch im Tiefbau weit verbreitet. Die an sie gestellten Anforderungen können deshalb in einem gewissen Bereich variieren. So sollten beispielsweise Kunststoffdichtungsbahnen, die für Aussenanwendungen im Hochbau bestimmt sind speziell gute Langzeitstabilität gegen Lichteinfluss resp. Langzeitbelastbarkeit bei hohen Temperaturen (im Sommer können Dachfolien Temperaturen bis zu 60°C ausgesetzt werden) resp. grossen Temperaturschwankungen aufweisen. Solche Folien werden vorzugsweise unter Zusatz von Lichtschutzmitteln und Antioxidantien hergestellt. Insbesonders der Zusatz von Antioxidantien wirkt sich zudem positiv auf die Heissluftschweissbarkeit und die Extrudierbarkeit, insbesonders auch bei Wiederverwertung von Produktionsabfällen aus. Sie verbessern die bei Kunststoffdichtungsbahnen praktisch nicht vermeidbare Anforderung einer guten Schweissbarkeit auch nach Alterung.

Im Tiefbau, z.B. beim Tunnelbau, ist die Lichtbeständigkeit ebenso wie die Temperaturbeständigkeit weniger wichtig, dafür wird grösserer Wert auf Flammfestigkeit gelegt. Dies kann z.B. durch Zumischen von flammhemmenden Stoffen oder nach Verwendung flammhemmender Polymerkomponenten, insbesonders heterogener Polymerkomponenten wie chloriertem Polyethylen, erzielt werden. Die erfindungsgemässen Dichtungsbahnen ermöglichen den ausreichenden Einbau von Flammschutzkomponenten ohne Verlust der gewünschten Eigenschaften wie Flexibilität und Schweissbarkeit.

Ferner lässt sich auch die Wasserdampfdurchlässigkeit der Dichtungsbahnen durch Wahl von Ausgangsmaterialien, z.B. heterogenen Copolymeren mit polaren Gruppen wie Ethylen-Vinylacetat- oder Ethylen-Methacrylat-Copolymeren stark erhöhen. Solche Dichtungsbahnen sind insbesonders im Hochbau gefragt.

Zur Erhöhung der Formstabilität ist z.B. eine Armierung möglich. Als Armierung eignen sich Gewebe, Gelege, Vliese, Glasfasern, etc. wie sie dem Fachmann auf diesem Gebiet bekannt sind.

Die Herstellung der Polyolefin-Zusammensetzungen kann z.B. dadurch erfolgen, dass die heterogenen und/oder homogenen Polyolefin-Komponenten und gegebenenfalls weitere Zusätze, wie Lichtschutzmittel und flammhemmende Mittel, miteinander vermischt und homogenisiert werden. Eine solche Polyolefin-Zusammensetzung kann dann, beispielsweise auf einem Kalander zur Kunststoffdichtungsbahn verarbeitet werden.

Die erfindungsgemässen Kunststoffdichtungsbahnen stellen ein weiches, sehr flexibles wirtschaftlich günstiges Gebilde, vor allem Flächengebilde dar, welches ausgezeichnete Gesamteigenschaften aufweist; erwähnt sind z.B. sehr gute Dimensionsstabilität, gute Flammbeständigkeit, hohe Alterungsbeständigkeit, sehr gute Witterungsbeständigkeit, Feuchtigkeitsundurchlässigkeit, hohe Belastbarkeit (z.B. wichtig bei Grundwasserabdichtungen), Begehbarkeit, gute Beständigkeit gegen chemische Einflüsse, vor allem eine hohe mechanische Festigkeit und thermische Stabilität, eine hohe Zugfestigkeit, tiefer Elastizitätsmodul, Wasserdampfdurchlässigkeit, kleiner Längenausdehnungskoeffizient, eine geringe Schwindung, sehr gute Beständigkeit gegenüber Mikroorganismen, Recyclierbarkeit der Folie und gute mechanische Befestigung und Verklebbarkeit. Darüber hinaus ist dieses Gebilde von tiefen Temperaturen (-30°C) bis hohen Temperaturen (+80°C) über Dauer beständig; vor allem besitzt es eine verbesserte Reissfestigkeit bei gleichzeitig höherer Dehnung, was zu einer Verbesserung des gesamten dynamischen Verhaltens der erfindungsgemässen Kunststoffdichtungsbahnen führt.

Besondere hervorzuhebende Eigenschaften der erfindungsgemässen Kunststoffdichtungsbahnen sind vor allem deren hohe Flexibilität, deren sehr gute Heissluftschweissbarkeit, insbesondere auch nach einer thermischen Langzeitbelastung (z.B. 70°C bis 80°C/während 5 bis 12 Monate) und deren Kalandrierbarkeit. Sie sind demgemäss sehr anwenderfreundlich.

Eine Folie kann als hochflexibel bezeichnet werden, wenn z.B. deren Schubmodul (N/mm²) sehr tief ist, z.B. bei -20°C kleiner als etwa 210, insbesondere kleiner als 180 und vor allem kleiner als 110 N/mm² und bei +20°C kleiner als etwa 44 N/mm² .

Die Herstellung der Kunststoffdichtungsbahnen kann nach bekannten Verfahren, wie Fressen, Giessen, Kalandrier-, Extrudier-, oder Tiefziehverfahren oder über eine Breitschlitzdüse erfolgen. Nach der Herstellung wird die Kunststoffdichtungsbahn vor allem in Rollenform oder zu Planen in der Fabrik vorkonfektioniert.

Das bevorzugte Verfahren ist das Kalandrierverfahren oder die Breitschlitzdüsenextrusion. Beim Kalandrierverfahren z.B. werden die Komponenten zu einer Vormischung bei Raumtemperatur verarbeitet, diese in einen Buss-Kneter® gegeben wo die Homogenisierung und Plastifizierung bei etwa 160° bis 240°C stattfindet und die plastifizierte Mischung vom Austragsextruder zum Kalander transportiert wird und unter geeigneten Walzendrücken, Temperatur und Geschwindigkeit zwischen den Kalanderwalzen hindurchgeführt wird, wobei sie bestimmte Dicken, Dichte, Transparenz oder auch bestimmte Oberflächeneffekte wie Glanz, Glätte und Prägung erhält. Anschliessend werden die Ränder geschnitten und die fertige Folie aufgerollt. Wesentlich ist dabei, dass alle Komponenten vor dem Eintritt in den Kalander homogen und innig miteinander vermischt sind.

Verwendung finden die Kunststoffdichtungsbahnen für die verschiedensten Anwendungen z.B. im Tiefbau als Tunnel-KDB's, Trinkwasserabdichtung, Beckenauskleidung oder im Hochbau als z.B. Dach-KDB's; dann für Boden- und Wandbeläge, für Rohre, Schläuche, Bänder und Profile und, wie erwähnt, vor allem als Kunststoffdichtungsbahnen (KDB's) selbst, d.h. relativ dicke, flächige, flexible, aufwickelbare Bahnen mit einer Dicke von etwa 0,8 bis 6,0 mm, vor allem 1,0 bis 4,0 mm für flexible Abdichtungen und Isolationen (Wärme, Kälte, Schall) z.B. als Teichsystem, als Deponiesystem, als Chemiewannenauskleidung und im Gewässerschutz z.B. als Auffang-Becken, Trinkwasserreservoir und Tank-lining.

Die Eigenschaftstests an den Kunststoffdichtungsbahnen wurden wie folgt durchgeführt:

Reissfestigkeit (gem. DIN 53455); Reissdehnung (gem. DIN 53455); Schubmodul (gem. DIN 53445); Weiterreissfestigkeit (gem. DIN 53515); Mechanische Durchschlagfestigkeit (gem. SIA 280, Nr. 14) und Kältebruch (gem. SIA 280, Nr. 2).

Die folgenden Beispiele dienen der weiteren Erläuterung der Erfindung. Sie sind nicht gedacht die Erfindung auf die Beispiele zu limitieren. Bei den homogenen Polyolefin-Copolymeren B1 bis B5 handelt es sich dabei um folgende Copolymere:

| Polymer | Homogenes Polyethylen-Copolymer mit einem 1-Octengehalt von etwa: |
|---|---|
| B1 | 10 - 20 Gew.-% |
| B2 | 10 - 20 Gew.-% |
| B3 | 21 - 40 Gew.-% |
| B4 | 21 - 40 Gew.-% |
| B5 | 21 - 40 Gew.-% |

Die Eigenschaften dieser Polymere sind der Tabelle 3 zu entnehmen.

Die heterogenen Polymere werden als Polymere A bezeichnet.

### Beispiele

Zur Herstellung einer 2,0 mm dicken Kunststoffdichtungsbahn wurde aus den in Tabelle 1 aufgeführten Komponenten der Beispiele 1 bis 20 eine Vormischung bei Raumtemperatur hergestellt. Die Vormischung wurde in einen Buss-Kneter® gegeben, in welchem die Homogenisierung und Plastifizierung bei etwa 160° bis 240°C erfolgte. Die plastifizierte Mischung wurde anschliessend vom Austragsextruder zum Kalander transportiert, auf welchem die Kunststoffdichtungsbahn mit einer Breite von 1 bis 2 Meter hergestellt wurde; anschliessend wurde diese durch Kühlwalzen des Kalanders auf 25°C abgekühlt, die Ränder geschnitten, und aufgerollt. Die so erhaltenen Bahnen weisen die aus Tabelle 2 ersichtlichen Eigenschaften auf.

**Tabelle 1**

| Beispiel Nr. | Komponenten In Gew.-% | | | | | | | |
|---|---|---|---|---|---|---|---|---|
| | Polymer B | | | | | Polymer A | | |
| | B1 | B2 | B3 | B4 | B5 | | | |
| 1 | 77 | | | 23 | | | | |
| 2 | 67 | | | 33 | | | | |
| 3 | 50 | | | 50 | | | | |
| 4 | 40 | | | 40 | | | | 20(Füllstoff)^{A)} |
| 5 | 33 | | | 33 | | | | 34(Füllstoff)^{A)} |
| 6 | | | | 59 | | 41(LLDPE)^{B)} | | |
| 7 | | | 50 | | | 50(VLDPE)^{C)} | | |
| 8 | | | | | 50 | 50(VLDPE)^{C)} | | |
| 9 | | | 77 | | | 23(HDPE)^{D)} | | |
| 10 | | | | 70 | | 30(HDPE)^{E)} | | |
| 11 | 90 | | | | | | | 10(Elastomer)^{F)} |
| 12 | 83 | | | | | | | 17(Elastomer)^{G)} |
| 13 | 83 | | | | | | | 17(Elastomer)^{H)} |
| 14 | 70 | | | | | | | 30(Elastomer)^{K)} |
| 15 | 83 | | | | | | | 17(Elastomer)^{K)} |
| 16 | 65 | | | | | | 35^{L)} | |
| 17 | 50 | | | | | | 50^{L)} | |
| 18 | | 65 | | | | | 35^{M)} | |
| 19 | 40 | | | | | | 40^{L)} + 20^{K)} | |
| 20 | 40 | | | | | | 40^{N)} + 20^{K)} | |
| Legende A) = Kreide B) = Standard-Butencopolymer (d = 0,918, MFI = 0,8) C) = d = 0,90, MFI = 0,8 D) = d = 0,955, MFI = 0,4 E) = d = 0,943, MFI <0,1 F) = SEBS (Styrol-Ethylen-Buten-Styrol-Blockcopoly mer) Shore-Härte A = 60 G) = Ethylen-Propylen-Dien-Elastomer (52 % PE, 43 % PP, 5 % DIEN) H) = I) = Ethylen-1-Buten-Elastomer K) = CPE (Chloriertes Polyethylen, Chlorgehalt 36%) L) = Ethylen-Vinylacetat-Copolymer mit 24 % Vinyl acetat-Gehalt (d = 0.948, MFI = 2) M) = Ethylen-Methylacrylat-Copolymer mit 14 % Methylacrylat-Gehalt (d = 0.96, MFI = 2) N) = Ethylen-Vinylacetat-Copolymer mit 18 % Vinyl acetat-Gehalt (d = 0.94, MFI = 0.7) | | | | | | | | |

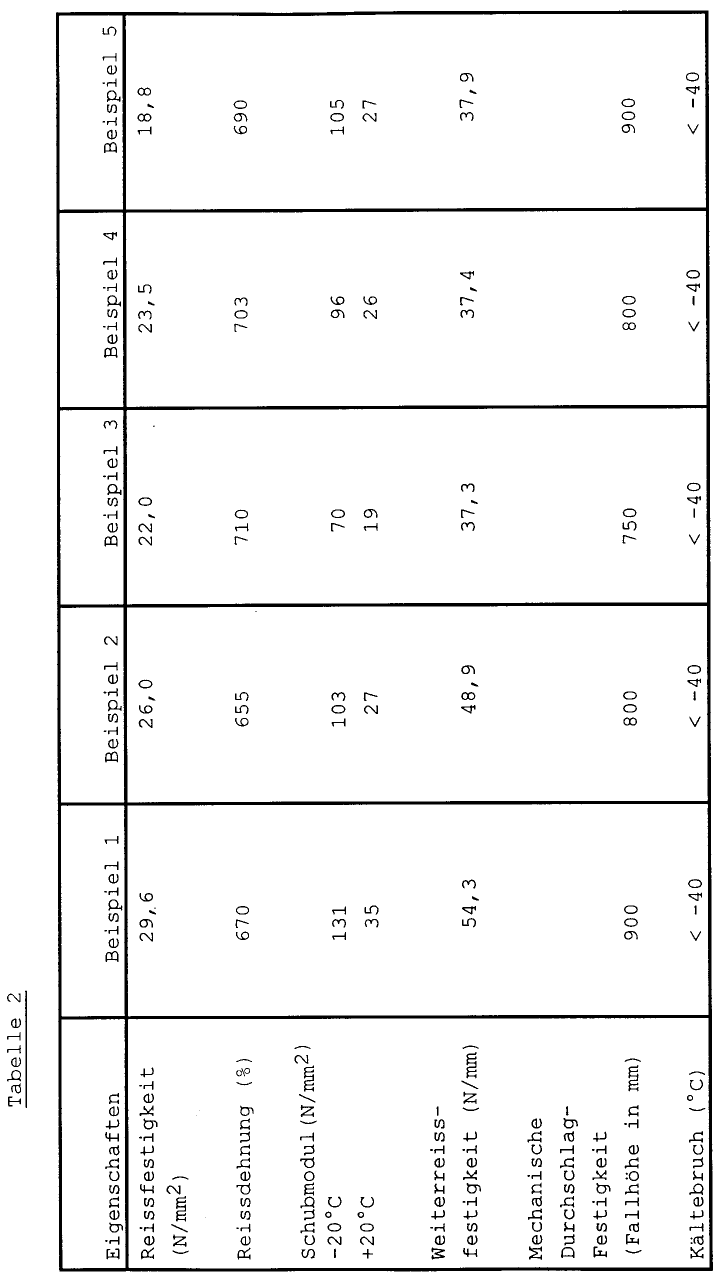

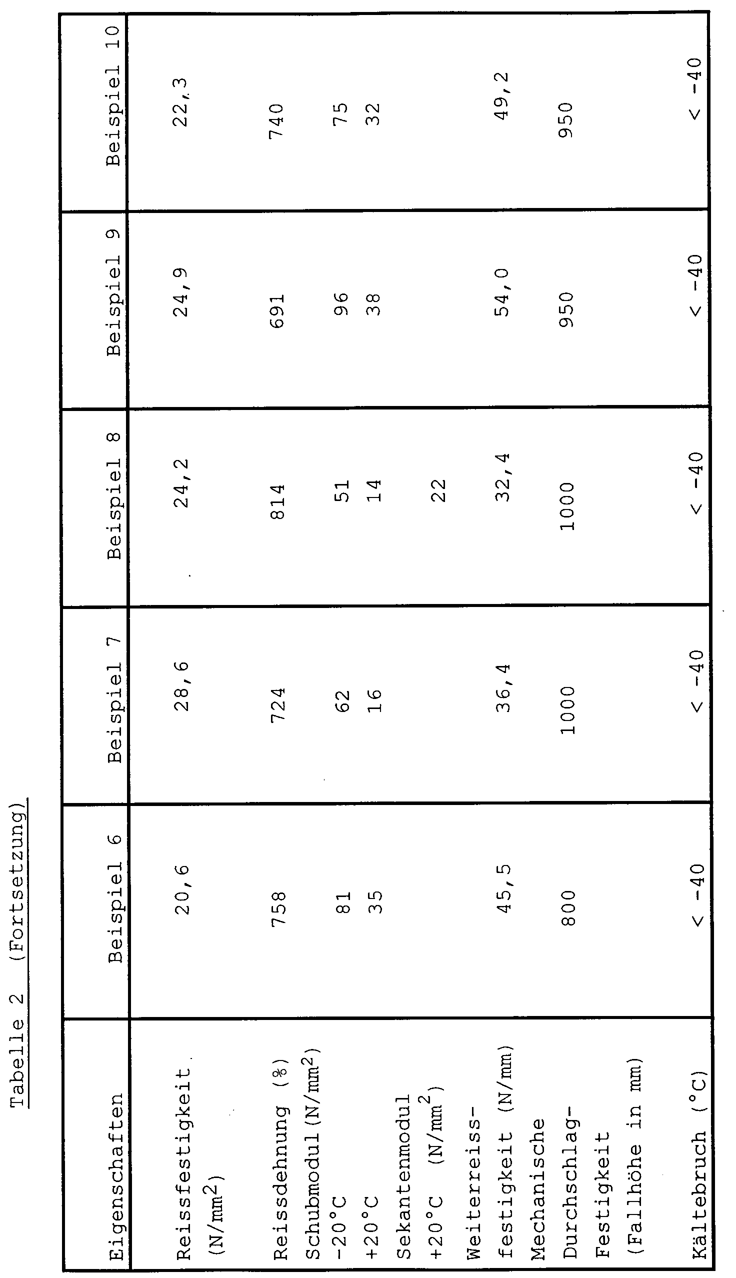

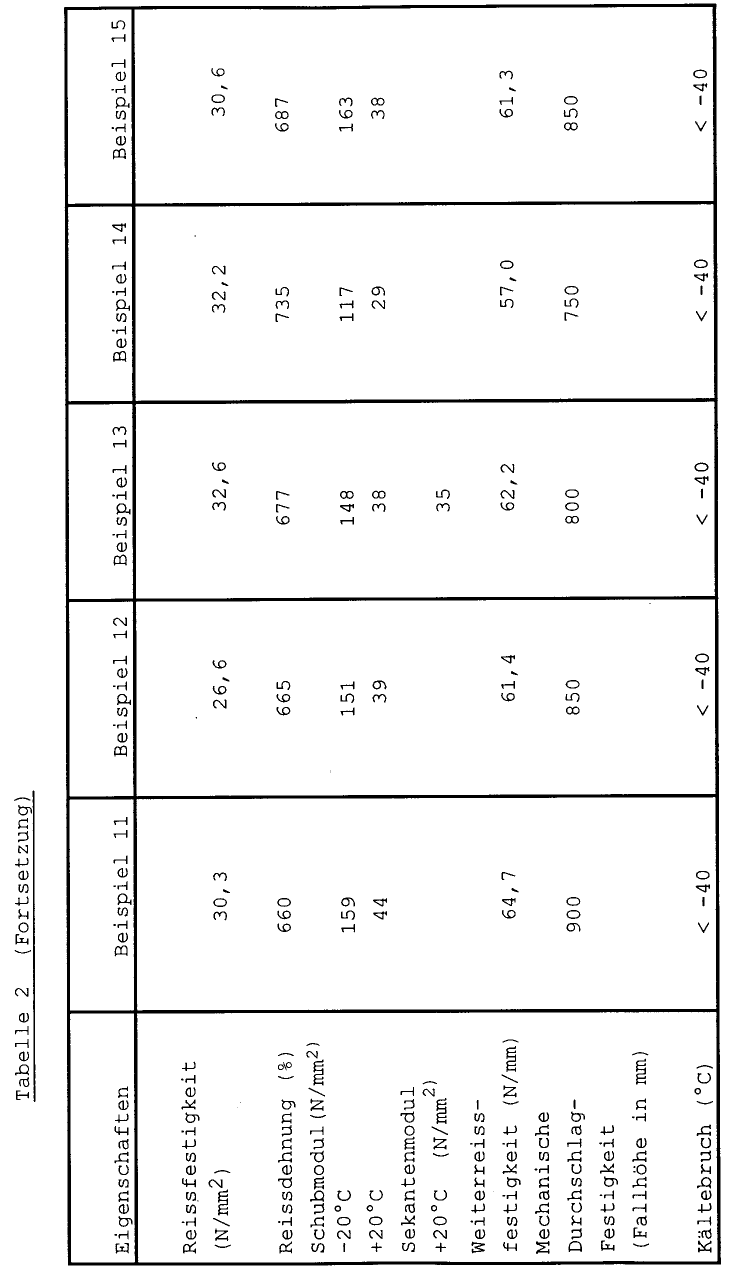

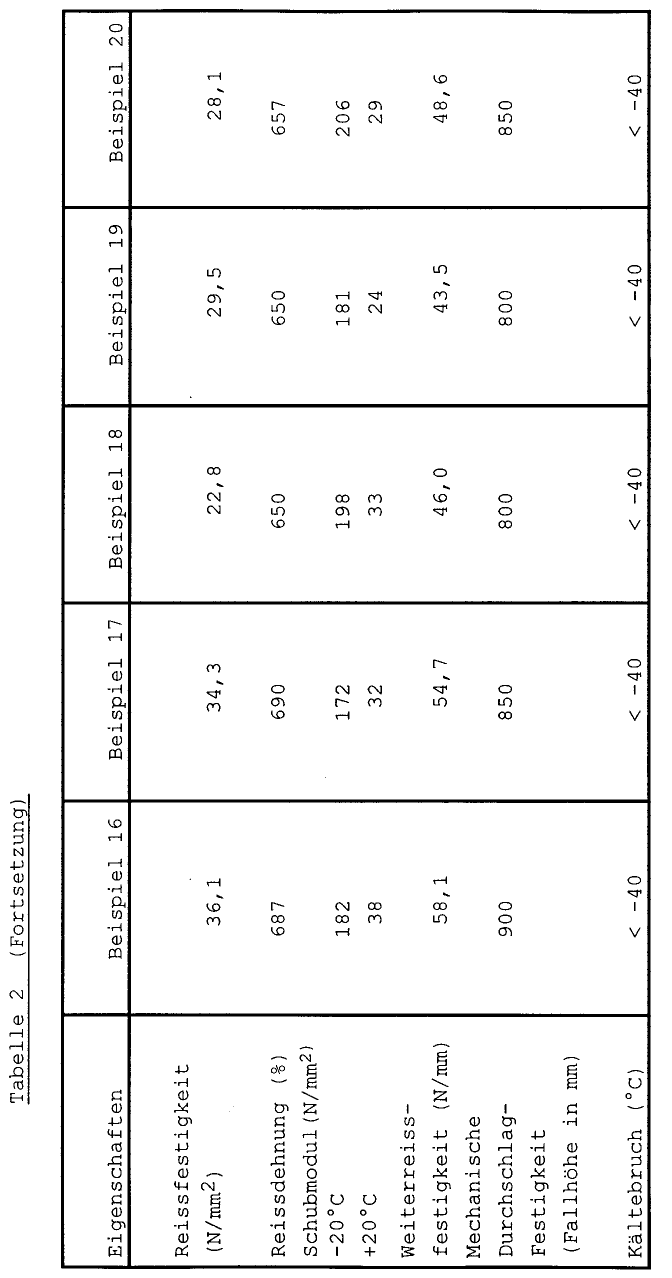

Die Beispiele 6 - 20 veranschaulichen klar, dass z.B. härtere bzw. weichere, heterogene Polyethylen oder Polyolefin Polymere (A) mit einem weicheren bzw. härterem, homogenen Polyethylen Polymer (B) abgemischt werden können, oder dass z.B. härtere homogene Polymere (B) mit weicheren homogenen Polymeren (B) (Beispiele 1-5) abgemischt werden können, sodass die gestellten Anforderungen erfüllt werden, um z.B. eine massgeschneiderte Flexibilität zu erlangen.

Die folgende Tabelle 3 enthält zum Vergleich die Eigenschaften der homogenen Einzelpolymere (B).

**Tabelle 3**

| Prüfung | Polymer B1 | Polymer B2 | Polymer B3 | Polymer B4 | Polymer B5 |
|---|---|---|---|---|---|
| Dichte | 0,903 | 0,89 | 0,88 | 0,87 | 0,87 |
| MFI: 190°C, 2,16 kg (g/10 min.) | 0,87 | 1,0 | 1,0 | 1,0 | 3,0 |
| Reissfestigkeit (N/mm²) | 33,7 | 28,9 | 24,4 | 15,6 | 16,2 |
| Reissdehnung (%) | 652 | 651 | 692 | 702 | 835 |

| Schubmodul (N/mm²) | | | | | |
|---|---|---|---|---|---|
| -20°C | 197 | 71 | 32 | 17 | 20 |
| +20°C | 50 | 17 | 10 | 5 | 6 |
| Weiterreissfestigkeit (N/mm) | 64,6 | 39,1 | 29,2 | 23,2 | 25,7 |
| Mechanische Durchschlagfestigkeit (Fallhöhe in mm) | 900 | 700 | 650 | 600 | 600 |
| Kältebruch (°C) | < -40 | < -40 | < -40 | < -40 | < -40 |

Aus der Tabelle 3 ist ersichtlich, dass im Vergleich zu den Eigenschaften der erfindungsgemässen Mischungen, der Beispiele 1 bis 20 veranschaulicht in der Tabelle 2, das homogene Polymer B1 ein steifes, hartes Polyolefin darstellt, während die homogenen Polymeren B2 bis B5 sehr weiche Polyolefine verkörpern. Sowohl das Polymer B1 als auch die Polymeren B2 bis B5 sind alleine für einen Einsatz in einer Kunststoffdichtungsbahn nicht geeignet, da sie einerseits relativ steif sind (Polymer B1) und andererseits zwar weich (Polymere B2 bis B5) aber eine zu geringe Weiterreiss- und Durchschlagsfestigkeit aufweisen und zudem bei etwa 80°C klebrig werden.

## Patentansprüche

1. Kunststoffdichtungsbahn enthaltend mindestens zwei verschiedene Polyolefin-Polymere, dadurch gekennzeichnet, dass mindestens ein erstes Polyolefin-Polymer ein homogenes Polyolefin-Copolymer ist, welches nach der single-site Katalysatortechnik herstellbar ist und eine Molekulargewichtsverteilung von 1,5 bis 2,5 besitzt.

2. Kunststoffdichtungsbahn gemäss Anspruch 1, dadurch gekennzeichnet, dass die Zusammensetzung neben dem homogenen Polyolefin-Copolymer a) mindestens ein heterogenes Standard Polyolefin Homo- oder Copolymer in Mengen von etwa 10 bis 60 Gew.-% oder b) ein weiteres vom ersten homogenen Copolymer verschiedenes zweites homogenes Copolymer in Mengen von etwa 20 bis 80 Gew.-% enthält,
wobei die Summe des ersten homogenen Copolymeren mit dem heterogenen Homo- oder Copolymer resp. dem zweiten homogenen Copolymer max. 100 % ergibt.

3. Kunststoffdichtungsbahn gemäss Anspruch 1 oder 2, dadurch gekennzeichnet, dass die Zusammensetzung als homogenes Copolymer mindestens ein Polyethylen/Olefin Copolymer, insbesonders ein Polyethylen/α-Olefin Copolymer enthält.

4. Kunststoffdichtungsbahn gemäss Anspruch 3, dadurch gekennzeichnet, dass die Zusammensetzung als homogenes Copolymer ein Polyethylen/C₃-C₂₀ α-Olefin Copolymer, insbesonders ein Polyethylen/C₄-C₁₂ α-Olefin Copolymer, speziell bevorzugt ein Polyethylen/C₄-C₈ α-Olefin Copolymer enthält.

5. Kunststoffdichtungsbahn gemäss einem der Ansprüche 1 bis 4, dadurch gekennzeichnet, dass der Olefin- bzw. α-Olefin Comonomer-Anteil im ersten Copolymer etwa 10 bis 20 Gew.-% beträgt und das zweite Polymer ein heterogenes Polyolefin Polymer ist, wobei das heterogene Polyolefin-Polymer ein heterogenes Polyolefin-Copolymer oder ein heterogenes Polyolefin-Elastomer-Polymer ist oder enthält.

6. Kunststoffdichtungsbahn gemäss einem der Ansprüche 1 bis 4, dadurch gekennzeichnet, dass der Olefin bzw. α-Olefin Comonomer-Anteil im ersten Copolymer etwa 21 bis 40 Gew.-% beträgt und das zweite Polymer ein heterogenes Polyolefin-Polymer ist, wobei das heterogene Polyolefin-Polymer ein heterogenes Standard Polyethylen Polymer, ausgewählt aus der Gruppe umfassend HDPE, MDPE, LDPE, LLDPE, VLDPE und ULDPE, ist oder enthält.

7. Kunststoffdichtungsbahn gemäss einem der Ansprüche 1-4, dadurch gekennzeichnet, dass die Zusammensetzung eine Mischung enthält aus 20 bis 80 Gew.-%, insbesonders 30-80 Gew.-% eines ersten homogenen Polyethylen/C₃-C₂₀ α-Olefin Copolymer, dessen α-Olefin Comonomer-Anteil 10 bis 20 Gew.-% beträgt, und 20 bis 80 Gew.-%, insbesonders 20-70 Gew.-%, eines zweiten homogenen Polyethylen/C₃-C₂₀ α-Olefin Copolymer, dessen α-Olefin Comonomer-Anteil 21 bis 40 Gew.-% beträgt.

8. Kunststoffdichtungsbahn gemäss einem der Ansprüche 1 bis 7, dadurch gekennzeichnet, dass das mindestens eine homogene Copolymer eine Dichte von 0,86 - 0,91 g/cm³, insbesonders unter 0,9 g/cm³, aufweist.

9. Kunststoffdichtungsbahn gemäss einem der Ansprüche 1 bis 8, dadurch gekennzeichnet, dass das mindestens eine homogene Copolymer ein Schubmodul (+20°C) von unter 100 N/mm², insbesonders < 71 N/mm² aufweisen.

10. Kunststoffdichtungsbahn gemäss einem der Ansprüche 1 bis 9, dadurch gekennzeichnet, dass das zweite Polyolefin-Polymer ein heterogenes Homo- oder Copolymer ist, das polare Gruppen enthält.

11. Kunststoffdichtungsbahn gemäss einem der Ansprüche 1 bis 10, dadurch gekennzeichnet, dass das zweite Polyolefin-Polymer ein heterogenes Homo- oder Copolymer mit flammhemmenden Eigenschaften ist.

12. Kunststoffdichtungsbahn gemäss einem der Ansprüche 1 bis 11, dadurch gekennzeichnet, dass die Zusammensetzung weitere Zusätze enthält.

13. Verfahren zur Herstellung von Kunststoffdichtungsbahnen, dadurch gekennzeichnet, dass alle Komponenten der Zusammensetzung, wie sie in einem der Ansprüche 1 bis 12 definiert, miteinander vermischt und homogenisiert werden und dass die erhaltene Mischung anschliessend in einem Extruder bei erhöhter Temperatur plastifiziert wird und nach dem Kalander-Verfahren oder über eine Breitschlitzdüse extrudiert und fertiggestellt wird.

14. Verwendung eines homogenen Copolymers mit Schubmodul unter 100 N/mm², insbesonders < 75 N/mm², zur Herstellung von Kunststoffdichtungsbahnen.
